# EUROPÄISCHE PATENTSCHRIFT

(11) **EP 0 563 726 B1**
(45) Veröffentlichungstag und Bekanntmachung des Hinweises auf die Patenterteilung: **17.07.1996**
(21) Anmeldenummer: 93104643.7
(22) Anmeldetag: 22.03.1993
(51) Int. Cl.: C08F 6/00, C08L 31/00

(54) **Verfahren zur Verminderung des Restmonomerengehaltes in wässrigen Kunststoffdispersionen auf Polyvinylesterbasis**
Process for removing monomers from aqueous polymer dispersions of polyvinylesters
Procédé pour réduire les monomères résiduels contenus dans des dispersions aqueuses polymériques à base de polyvinylester

(30) Priorität: 28.03.1992 DE 4210208
(43) Veröffentlichungstag der Anmeldung: 06.10.1993
(73) Patentinhaber: HOECHST AKTIENGESELLSCHAFT, 65926 Frankfurt am Main (DE)
(72) Erfinder: Nölken, Ernst, Dr., W-6232 Bad Soden (DE); Rinno, Helmut, Dr., W-6238 Hofheim (DE); Huth, Hans-Ullrich, Dr., W-6073 Egelsbach (DE)

(56) Entgegenhaltungen:
- BE-A- 792 548
- CHEMICAL ABSTRACTS, vol. 83, no. 18, 3. November 1975, Columbus, Ohio, US; abstract no. 148038c, HIRAMATSU 'Acrylic polymers with low residual monomer' Seite 24 ;Spalte 2 ;
- DATABASE WPI Derwent Publications Ltd., London, GB; AN 70-10464R

## Beschreibung

Die Erfindung betrifft ein Verfahren zur Verminderung von unerwünschten, herstellungsbedingten Restmonomergehalten in wäßrigen Kunststoffdispersionen, deren Polymermoleküle Monomereinheiten aus Vinylestern enthalten und die Gehalte an restmonomeren Vinylestern und gegebenenfalls an Acetaldehyd aufweisen, durch selektive alkalische Verseifung der alkalisch verseifbaren restmonomeren Vinylester in der Dispersion und destillative Entfernung unverseifter restmonomerer Vinylester und des gegebenenfalls in der Ausgangsdispersion bereits vorhandenen sowie des zusätzlich aus den Vinylestern als Verseifungsprodukt entstehenden Acetaldehyds aus der Dispersion.

Bevorzugt ist die gleichzeitige destillative Entfernung von unverseiften restmonomeren Vinylestern und von Acetaldehyd während der selektiven Verseifung von verseifbaren restmonomeren Vinylestern. Es kann in manchen Fällen auch vorteilhaft sein, zunächst einen Teil der restmonomeren Vinylester selektiv zu verseifen und anschließend durch weitere selektive alkalische Verseifung von noch vorhandenen verseifbaren restmonomeren Vinylestern und gleichzeitige destillative Entfernung von noch vorhandenen unverseiften restmonomeren Vinylestern und von Acetaldehyd die Restmonomerenentfernung zu Ende zu fuhren. Es sind aber auch zeitaufwendigere und daher weniger vorteilhafte Varianten möglich, indem man entweder zunächst einen Teil der restmonomeren Vinylester zusammen mit dem gegebenenfalls bereits vorhandenen Acetaldehyd destillativ entfernt und anschließend durch selektive alkalische Verseifung von noch vorhandenen verseifbaren restmonomeren Vinylestern und gleichzeitige weitere destillative Entfernung von noch vorhandenen unverseiften restmonomeren Vinylestern und von Acetaldehyd die Restmonomerenentfernung zu Ende führt, oder indem man zunächst die restmonomeren Vinylester selektiv verseift und erst zeitlich später die destillative Entfernung des gebildeten Acetaldehyds durchführt.

Wäßrige Kunststoffdispersionen, die polymere Kunststoffpartikel auf der Basis von ethylenisch ungesättigten Monomeren mit Monomereinheiten aus Vinylestern enthalten, sind seit langem bekannt und besitzen viele Anwendungsgebiete, beispielsweise als Bindemittel für Farben und Anstriche, als Textilhilfsmittel, als Klebstoff, als Papierleimungsmittel, als Bindemittel für Faservliese und Syntheseleder, etc. Die Vorteile von Bindemittelsystemen und Klebstoffen auf wäßriger Dispersionsbasis sind u.a. ihre einfache Handhabbarkeit (Ungiftigkeit, Unbrennbarkeit, leichte Reinigung der Arbeitsgeräte, unproblematische Entsorgung) und ihre vorteilhaften ökologischen Eigenschaften, vergleichsweise zu konventionellen lösungsmittelhaltigen Lacken und Harzen bzw. deren Lösungen in organischen Lösungsmitteln. Organische Lösungsmittel sind in den wäßrigen Kunststoffdispersionen weitgehend bzw. vollständig entbehrlich und auch Polymerisate mit sehr hohen Molekulargewichten können als wäßrige Dispersionen mit hohem Polymerisatgehalt und niedriger Viskosität hergestellt und gefahrlos verarbeitet werden, im Gegensatz zu Lösungen solcher Polymerisate in organischen Lösungsmitteln, die im allgemeinen sehr hochviskos sind und folglich nur niedrig konzentriert verwendet werden können und bei ihrer Anwendung entsprechend große Lösungsmittelmengen freisetzen.

Wäßrige Kunststoffdispersionen finden daher zunehmend stärkere Verbreitung und neue Anwendungsgebiete. Unter den Kunststoffdispersionen auf Polyvinylesterbasis sind verschiedene Typen besonders bekannt, beispielsweise Vinylacetat-Homopolymerisatdispersionen z.B. für Klebstoffe und Anstriche, Vinylacetat/Vinylversatat- oder Vinylacetat/Butylacrylat- oder Vinylacetat/2-Ethylhexylacrylat-Copolymerisatdispersionen z.B. für Anstriche, Vinylacetat/Ethylen- bzw. Vinylacetat/Ethylen/Vinylchlorid-Copolymerisatdispersionen z.B. als Bindemittel für Faservliese, als Leimungsmittel bei der Papierherstellung und als Bindemittel für Anstrichfarben, oder Vinylacetat/Dibutylmaleinat-Copolymerisatdispersionen. Bekannt sind daneben auch sogenannte Reinacrylat-polymerisat- bzw. -copolymerisat-dispersionen und Styrol/Acrylat-Copolymerisatdispersionen z.B. für besonders hochwertige Beschichtungen und für wetterfeste Außenanstriche, wobei diese Dispersionen auch mit Kunststoffdispersionen auf Polyvinylesterbasis zur Eigenschaftsmodifizierung kombiniert oder aus Kostengründen mit diesen gestreckt werden können.

Ein bis heute noch nicht befriedigend gelöstes Problem mit solchen Dispersionen ist jedoch der Restgehalt an Vinylestermonomeren, insbesondere an Vinylacetat oder Vinylpropionat, und Acetaldehyd, der durch Hydrolyse der monomeren Vinylester entsteht. Da sich sowohl Vinylacetat und Vinylpropionat als auch insbesondere Acetaldehyd neuerdings bekanntlich als erheblich toxisch erwiesen haben, hat sich den Herstellern von Polyvinylesterdispersionen, insbesondere von Polyvinylacetat- und Polyvinylpropionatdispersionen, die Aufgabe gestellt, ihre Handelsprodukte mit möglichst niedrigen Restgehalten an monomeren Vinylestern und an Acetaldehyd verfügbar zu machen. Für die Herstellung von emissionsfreien und wäßrige Kunststoffdispersionen als Bindemittel enthaltenden chemisch-technischen Produkten, wie z.B. Anstrichfarben auf der Basis von wäßrigen Polyvinylesterdispersionen, wird angestrebt, die Gehalte der Polyvinylesterdispersionen an restmonomeren Vinylestern und an Acetaldehyd in die Nähe oder unter die gaschromatographisch erfaßbare Nachweisgrenze von ca. 20 ppm, bezogen auf die wäßrige Dispersion, abzusenken und gleichzeitig ein möglichst niedriges Geruchsniveau beim Endprodukt zu erzielen.

Es ist bekannt, die Entmonomerisierung durch Auspolymerisieren der Vinylesterrestmonomeren mit Hilfe von Radikale bildenden Initiatoren oder von Redoxsystemen durchzuführen, jedoch kann man auf diese Weise großtechnisch nur Restvinylestergehalte von 0,05 bis 0,5 Gew.-%, bezogen auf die Dispersion, erreichen, während der Gehalt an gegebenenfalls bereits vorhandenem Acetaldehyd hierdurch praktisch nicht verringert wird. Es hat daher nicht an Versuchen gefehlt, die Wirksamkeit z.B. der Redox-Nachbehandlung zu erhöhen, beispielsweise durch Verlangsamung der Abkühlung des Polymerisationsgemisches im Reaktor, was u.a. ungünstige Auswirkungen auf die Raum-Zeit-Ausbeuten bei der Polymerisation hat. Ein weiterer Nachteil dieser Nachbehandlungsmethode besteht u.a. darin, daß das Redoxsystem, insbesondere dessen Oxidationsmittelkomponente, in manchen Fällen zu einer Erniedrigung der Dispersionsviskosität, verbunden mit einer Verringerung der Dispersionsstabilität, führen kann. Chemische Nachbehandlungen der Dispersionen, wie z.B. der genannte Zusatz von Redoxsystemen führen zu Nebenreaktionen und bringen außerdem zusätzliche Substanzen in das Produkt, was häufig unerwünscht ist, insbesondere wenn diese Substanzen ebenfalls toxikologisch bedenklich oder, wie z.B. Rongalit, von den Verarbeitern der Dispersionen als Produktbestandteil unerwünscht sind. Darüber hinaus führt eine längere Nachbehandlung mit Initiatoren und/oder Redoxsystemen häufig zu einer Beeinträchtigung des Geruchs.

Auch Entmonomerisierungsmethoden mittels Vakuumdestillation oder Wasserdampfdestillation, wie sie z.B. aus der DE-OS 2258538 bekannt sind, sind im allgemeinen unbefriedigend, obgleich sie in vielen Fällen eine Restmonomerenverminderung bis in die Nähe des anzustrebenden niederen ppm-Bereichs ermöglichen können. Sie verursachen aber erhebliche Energiekosten, verlängerte Reaktorbelegungen und haben außerdem den Nachteil, daß höhersiedende Restmonomere, wie z.B Vinylversatat oder Oktylacrylat, damit nur unvollständig eliminiert werden können.

Aus der DD-PS 219026 ist ein Verfahren bekannt, wonach man monomeres Vinylacetat in Ethen-Vinylacetat-Copolymerisaten durch Umsetzung des Polymerisationsgemisches mit methanolischem Natriummethylat zu Essigsäuremethylester umsetzen kann. Dieses Verfahren ist jedoch nicht auf wäßrige Polyvinylesterdispersionen anwendbar.

Der vorliegenden Erfindung lag somit die Aufgabe zugrunde, ein Verfahren zu entwickeln, das es ermöglicht, bei wäßrigen Homo- und Copolymerisatdispersionen von Vinylestern, insbesondere bei Homo- und Copolymerisatdispersionen des Vinylacetats, die Restmonomerenkonzentration auf Werte von ≤ 0,05 Gew.-%, bezogen auf die Dispersion, zu vermindern. Es war dabei außerdem wünschenswert, auch den in Vinylesterpolymerisat- bzw. -copolymerisatdispersionen häufig gegebenenfalls vorhandenen Acetaldehydgehalt ebenso nachhaltig zu vermindern, ohne die charakteristischen Anwendungseigenschaften der Dispersionen zu beeinträchtigen. Ein weiteres Ziel der Erfindung war es, Produkte mit einem möglichst geringen Restgeruch zu erzeugen.

Diese Aufgabe konnte nun überraschenderweise dadurch gelöst werden, daß man die Dispersionen einer nachträglichen selektiven Verseifungsbehandlung bei einem schwach alkalischen p_{H}-Wert und gegebenenfalls erhöhter Temperatur unterwirft, in deren Verlauf die alkalisch verseifbaren restmonomeren Vinylesteranteile praktisch vollständig hydrolytisch in Carbonsäuren und Acetaldehyd gespalten werden, während die entsprechenden Vinylestermonomereinheiten in den Polymerisat- bzw. Copolymerisatmolekülen der polymeren Dispersionspartikel überraschenderweise weitgehend unverändert bleiben.

Die selektive alkalische Verseifung der alkalisch verseifbaren restmonomeren Vinylester erfolgt vorzugweise gleichzeitig mit der destillativen Entfernung aller in der wäßrigen Dispersion enthaltenen flüchtigen, vorzugsweise organischen, Substanzen durch Abdestillieren von Wasser, vorzugsweise unter Vakuum, aus der Dispersion, vorzugsweise durch Einleiten von Wasserdampf unter Vakuum oder Durchleiten von Luft oder Inertgas bei Normaldruck oder vermindertem Druck, vorzugsweise jeweils bei der dem Druck in der Destillationsapparatur entsprechenden Siedetemperatur des Wassers. Durch die erfindungsgemäße Kombination von selektiver hydrolytischer Spaltung der hydrolysierbaren restmonomeren Vinylester mit der destillativen Entfernung von unverseiften restmonomeren Vinylestern zusammen mit dem in der Dispersion gegebenenfalls bereits vorhandenen sowie dem bei der selektiven alkalischen Verseifung der restmonomeren Vinylester als Reaktionsprodukt gebildeten Acetaldehyd können eine wesentliche Verkürzung des gesamten Entmonomerisierungsverfahrens und gleichzeitig ein hoher Entmonomerisiserungsgrad der Dispersion erreicht werden, vergleichsweise zur gegebenenfalls nacheinander erfolgenden Einzeldurchführung der kombinierten Maßnahmen. Das erfindungsgemäße Kombinationsverfahren ist darüber hinaus durch hohe Wirtschaftlichkeit gekennzeichnet, da die Belegzeiten der Verfahrensapparaturen niedrig gehalten werden können. Durch das erfindungsgemäße Entmonomerisierungsverfahren können weitgehend geruchsfreie Produkte erhalten werden.

Der bei der hydrolytischen Vinylesterspaltung gebildete sowie der gegebenenfalls bereits vorhandene Acetaldehyd wird bei der destillativen Behandlung der Dispersion unter Mitverwendung von Wasserdampf oder Inertgas viel rascher als ein Vinylestermonomer aus dem System entfernt. Das bei der Esterspaltung ebenfalls entstehende Carbonsäuresalz kann mit überraschend vorteilhafter Wirkung in der Dispersion verbleiben, wo es u.a. durch seine Pufferwirkung die Haltbarkeit der Dispersion günstig beeinflußt.

Nach erfolgter Verseifungsreaktion und Destillation beträgt der Gehalt an alkalisch verseifbaren restmonomeren Vinylestern und an Acetaldehyd jeweils weniger als 0,01 Gew.-%, vorzugsweise weniger als 0,002 Gew.-%, bezogen auf die Dispersion, d.h. die in der Ausgangsdispersion insbesondere störenden restmonomeren Vinylesteranteile und der Acetaldehyd können erfindungsgemäß praktisch vollständig eliminiert werden.

Die so erhaltenen weitgehend monomer- und acetaldehydfreien Polyvinylester enthaltenden Dispersionen besitzen noch den weiteren Vorteil, geruchsneutral zu sein. Durch Wasserverluste bei der Destillation kann sich der prozentuale polymere Feststoffanteil in der Dispersion entsprechend erhöhen, was praktisch nicht von Nachteil zu sein braucht, da die Ausgangsdispersion im allgemeinen bereits bei ihrer Herstellung unschwer auf einen entsprechend niedrigeren Ausgangsfeststoffgehalt eingestellt werden kann.

Es wurde auch bereits ein Verfahren vorgeschlagen (vgl. DE-OS 41 10 058), bei dem die in wäßrigen Polyvinylesterdispersionen verbliebenen Vinylesterrestmonomeren ebenfalls alkalisch verseift, anschließend aber nicht destilliert sondern oxidativ weiterbehandelt werden.

Gegenstand der Erfindung ist daher ein Verfahren zur Verminderung des Gehaltes an restmonomeren Vinylestern und gegebenenfalls an Acetaldehyd in wäßrigen Kunststoffdispersionen, die disperse Polymerisatpartikel auf der Basis von ethylenisch ungesättigten Monomeren mit Monomereinheiten aus Vinylestern enthalten und aus den zugrundeliegenden Monomeren bzw. Comonomeren durch Emulsions-, Suspensions-, Perl-, Lösungs- oder Substanzpolymerisation hergestellt wurden, dadurch gekennzeichnet, daß man zur Eliminierung von Restgehalten an monomeren Vinylestern und gegebenenfalls an Acetaldehyd die alkalisch verseifbaren monomeren Vinylester durch eine selektive Verseifungsbehandlung der Dispersionen bei einem schwach alkalischen p_{H}-Wert und vorzugsweise bei erhöhter Temperatur hydrolytisch in die entsprechenden Carboxylate und in Acetaldehyd spaltet und den Acetaldehyd oder, vorzugsweise gleichzeitig, unverseifte restmonomere Vinylester und Acetaldehyd abdestilliert.

Das erfindungsgemäße Verfahren ist bevorzugt zur Eliminierung von restmonomerem Vinylacetat und Vinylpropionat, insbesondere Vinylacetat, sowie von durch Verseifung gebildetem und gegebenenfalls bereits vorhandenem Acetaldehyd aus wäßrigen Kunststoffdispersionen anwendbar.

Die Herstellung der wäßrigen Ausgangs-Polyvinylesterdispersionen kann in bekannter Weise aus den entsprechenden Monomeren durch radikalische Polymerisation, vorzugsweise durch Emulsions-, Suspensions- oder Perlpolymerisation, erfolgen. Sie kann in manchen Fällen auch aus Lösungspolymerisaten oder aus Lösungen von Substanzpolymerisaten nach bekannten Methoden über deren wäßrige Emulsionen erreicht werden.

Bevorzugt eingesetzte Ausgangskunststoffdispersionen sind solche, deren Polymerisatpartikel Homopolymerisate oder Copolymerisate des Vinylacetats oder Vinylpropionats, insbesondere des Vinylacetats, enthalten oder aus Copolymerisaten des Vinylacetats, vorzugsweise mit Ethylen, bestehen.

Bevorzugt eingesetzte Ausgangskunststoffdispersionen sind ferner solche, deren Polymerisatpartikel Copolymere aus Vinylacetat und einer oder mehreren Monomereinheiten aus der Gruppe Vinylester von (C₃-C₁₈)-Carbonsäuren, Acrylester, Methacrylester, Maleinsäure-, Fumarsäure-, Itakonsäure-halbester oder -diester von (C₁-C₂₂)-Alkoholen oder von (C₂-C₂₂)-Hydroxyalkoholen, Amide oder Mono- oder Di-(C₁-C₁₂)alkylamide oder -(C₂-C₁₂)alkylolamide von ethylenisch ungesättigten (C₃-C₅)-Mono- oder -Dicarbonsäuren, Ethylen, Isobutylen, Vinylchlorid, Vinylidenchlorid, Vinyl(C₁-C₄)alkylether, Acrylnitril, Acrylsäure, Methacrylsäure, Acrylamido-2-methyl-propansulfonsäure, Vinylphosphonsäure oder Vinylsulfonsäure enthalten.

Wichtig z.B. für den Klebstoff- oder Textilsektor sind Copolymerisate mit Comonomereinheiten aus N-Methylolacrylamid, N-Alkoxymethylacrylamid, 2-Hydroxyethyl- und 2-Hydroxypropylacrylat sowie aus den entsprechenden Methacrylatverbindungen.

Um einen gewissen Grad an Vernetzung zu erzielen, können die Copolymerisate Monomereinheiten aus Adipinsäuredivinylester, Diallylmaleinat, Trimethylolpropantriacrylat, Allylmethacrylat, N-Methylolacrylamid, Triallylcyanurat, Dicyclopentadienylacrylat, Methylenbisacrylamid enthalten. Die erfindungsgemäß eingesetzten Ausgangs-Kunststoffdispersionen enthalten gegebenenfalls ferner übliche Zusätze, wie z.B. ionische und/oder nichtionische Emulgatoren sowie Schutzkolloide.

Vor dem Einsatz im erfindungsgemäßen Verfahren kann der Restmonomerengehalt (RMG) der Ausgangs-Kunststoffdispersionen durch chemische Vorbehandlung, vorzugsweise durch Auspolymerisieren mittels Radikalbildnern oder Redoxkatalysatoren, bereits vermindert worden sein.

Die Durchführung der Verseifungsbehandlung der Dispersion bei einem schwach alkalischen p_{H}-Wert erfolgt vorzugsweise im p_{H}-Bereich von 7,1 bis 10, insbesondere von 7,5 bis 9, und vorzugsweise im Temperaturbereich von 20 bis 100 °C, insbesondere 40 bis 80 °C, besonders bevorzugt 50 bis 70 °C.

Zur Durchführung der Verseifungsreaktion werden der wäßrigen Kunststoffdispersion bei der gewählten, vorzugsweise erhöhten, Temperatur anorganische oder organische basische Verbindungen zugesetzt, vorzugsweise in 0,5 bis 2-facher stöchiometrischer Menge, insbesondere in einfacher stöchiometrischer Menge, bezogen auf die zur Neutralisation in der Dispersion gegebenenfalls bereits vorliegenden freien Säuren zuzüglich der bei der Verseifungsreaktion aus den Vinylestern entstehenden Säuren, so daß in der Dispersion ein neutraler bis schwach alkalischer pH-Wert resultiert. Der Zusatz basischer Verbindungen erfolgt vorzugsweise stufenweise unter p_{H}-Kontrolle, vorzugsweise mit gleichzeitiger destillativer Entfernung unverseifter restmonomerer Vinylester zusammen mit Acetaldehyd. Eine weitere bevorzugte Verfahrensvariante besteht darin, daß man zunächst etwa die Hälfte bis Dreiviertel der vorhandenen verseifbaren restmonomeren Vinylester unter p_{H}-Kontrolle verseift und erst danach die destillative Entfernung unverseifter restmonomerer Vinylester und des Acetaldehyds beginnt unter gleichzeitiger Fortsetzung der p_{H}-kontrollierten selektiven Verseifung restmonomerer Vinylester bis zur vollständigen Entmonomerisierung der Dispersion. Die p_{H}-Wert-Kontrolle der Dispersion erfolgt dabei vorzugsweise ständig mittels einer Glaselektrode, um eine exakte p_{H}-Wert-Einstellung bzw. -Aufrechterhaltung zu gewährleisten. Dadurch wird eine Überschreitung des für die gezielte selektive Verseifung der restmonomeren Vinylester optimalen p_{H}-Wertbereichs während der Verseifungsreaktion und nach deren Abschluß vermieden. Dies ist sehr wichtig, um eine unerwünschte Verseifung von Estergruppen in dem Vinylesterpolymerisat oder -copolymerisat zu vermeiden.

Der Endpunkt der Verseifung der restmonomeren Vinylester kann z.B. dadurch festgelegt werden, daß man in einem Vorversuch die zur Verseifung erforderliche Alkalihydroxidmenge ermittelt, oder daß man den Vinylestergehalt in der Dispersion während des Verseifungsprozesses laufend gaschromatographisch kontrolliert.

Der Zusatz der basischen Verbindungen erfolgt vorzugsweise in Form von verdünnten wäßrigen Basenlösungen, insbesondere mit Basenkonzentrationen von 0,5 bis 50 Gew.-%, besonders bevorzugt 1 bis 10 Gew.-%, um eine exakte Dosierung bei der p_{H}-Wert-Einstellung zu ermöglichen.

Die Verseifungsbehandlung der Dispersion kann diskontinuierlich, z.B. in einer heizbaren Rührapparatur, oder kontinuierlich, z.B. in einem heizbaren Röhrenreaktor mit angeschlossener Destillationsvorrichtung, erfolgen, wobei im Röhrenreaktor Temperaturen bis zu 100 °C, vorzugsweise 85 bis 100 °C, und Verweilzeiten von 1 bis 5 Minuten vorteilhaft sein können. Die Verseifungsgeschwindigkeit nimmt unter vergleichbaren Bedingungen mit steigender Reaktionstemperatur zu. Im allgemeinen kann die Verseifung vorzugsweise zwischen 1 Minute und 7 Stunden, insbesondere 6 Minuten bis 4 Stunden, dauern. Vorzugsweise werden die unmittelbar nach ihrer Herstellung häufig warm anfallenden Ausgangspolymerisatdispersionen sogleich der erfindungsgemäßen Verseifungsbehandlung zugeführt.

Als basische Verbindungen im Sinne der Erfindung kommen vorzugsweise folgende Verbindungen bzw. insbesondere deren wäßrige Lösungen bzw. wäßrige Verdünnungen zur Anwendung:
Alkalioxide, Alkalihydroxide, Alkalicarbonate, Alkalihydrogencarbonate, Erdalkalioxide, Erdalkalihydroxide, Erdalkalicarbonate, Ammoniak, Alkanolamine, quaternäre Alkyl- oder Alkylarylammoniumhydroxide, wobei Alkaliverbindungen, insbesondere Natriumhydroxid und Kaliumhydroxid, besonders bevorzugt sind.

Die destillative Abtrennung des gebildeten sowie des gegebenenfalls bereits vorhandenen Acetaldehyds kann während der alkalischen Verseifungsreaktion oder im Anschluß daran erfolgen. Die Destillation kann unter erhöhtem Druck vorgenommen werden, vorzugsweise wird sie aber unter Normaldruck oder insbesondere unter vermindertem Druck durchgeführt.

Zur Beschleunigung der Destillation kann Wasserdampf oder ein Trägergas, wie z.B. Luft, Stickstoff, Argon oder Kohlendioxid, über die Oberfläche der Kunststoffdispersion geleitet werden. Vorteilhafterweise wird jedoch das Trägergas in der Destillationsapparatur vom Boden her durch die Kunststoffdispersion geleitet. Bei Verwendung eines Trägergases wie Luft, Stickstoff oder Argon bei der Entmonomerisierung werden im Kühler gegebenenfalls niedriger temperierte Kühlmittel als Wasser, z.B. Kühlsole oder Aceton/Trockeneis, eingesetzt.

Bei der Entmonomerisierung und der Destillation kann es unter Umständen zu einer lästigen Schaumbildung kommen. Sie kann verhindert werden durch den Einsatz geringer Mengen, vorzugsweise 0,001 bis 0,5 Gew.-%, bezogen auf die Dispersion, an Entschäumungsmitteln auf Basis natürlicher Fette und Öle, wie z.B. Spermöl und Tranölen, Paraffinöl, langkettigen Alkoholen wie Cetylalkohol, hochpolymeren Fettsäurepolyglykolestern, Sorbitanmonolaurat und Silikonen. Vorzugsweise werden emissionsarme und geruchsfreie Entschäumer eingesetzt.

Erfindungsgemäß liegen die Gehalte an den alkalisch verseifbaren restmonomeren Vinylestern, vorzugsweise an Vinylacetat, sowie an Acetaldehyd in der wäßrigen Kunststoffdispersion nach Beendigung der erfindungsgemäßen Eliminerungsmaßnahmen jeweils unterhalb von 0,01 Gew.-%, vorzugsweise bei ≤ 0,002 Gew.-%, jeweils bezogen auf die Dispersion, wobei der letztere Wert die derzeit untere Nachweisgrenze der angewandten gaschromatographischen Analysenmethode darstellt.

Die erfindungsgemäß von Restmonomeranteilen und Acetaldehyd befreiten und emissionsarm bzw. emissionsfrei erhaltenen wäßrigen Kunststoffdispersionen auf Basis von Vinylestermonomereinheiten enthaltenden Polymerisaten eignen sich vorzugsweise als Bindemittel in emissionsarmen bzw. emissionsfreien wäßrigen Zubereitungen für Anstriche, Beschichtungen, Putzmörtel, Dekorationsmörtel, Klebstoffe, Papierleimungsmittel, Faservliesbindemittel, Textilhilfsmittel, Lebensmittelbeschichtungsmittel, Anstrichfarben und chemisch-technische Formulierungen, insbesondere für Anwendungen in Innenräumen bzw. in geschlossenen Räumen. Sie enthalten gegebenenfalls weitere übliche Zusätze, wie z.B. Konservierungsmittel.

Die Erfindung wird durch die nachfolgenden Beispiele näher erläutert.

### Beispiel 1

5500 g einer wäßrigen 56,7 gew.-%igen Vinylacetat/Ethylen-Copolymerisatdispersion mit 18 % Gew.-% Ethylen im Copolymerisat und einem p_{H}-Wert von 4,3 werden in einem 10 1 4-Halskolben mit Rührer, Heizbad, Innenthermometer, in die Dispersion eintauchender p_{H}-Elektrode und eintauchendem Gaseinleitrohr mit 0,73 g Entschäumer, der in 12,2 g Wasser dispergiert ist, verrührt, und dann der Vinylacetat- und Acetaldehydgehalt der Dispersion gaschromatographisch bestimmt (Probe a). Die Dispersion wird auf 60 °C Innentemperatur erhitzt und ihr p_{H}-Wert durch Zugabe von 200 ml 3,2 gew.-%iger Natronlauge auf 9 eingestellt (Probe b). Unter Vakuum von 200 - 400 mbar wird 8 Stunden Luft durch die Dispersion geleitet und dabei während der ersten 6 Stunden der p_{H}-Wert von 9 durch Zutropfen von 3,2 gew.-%iger Natronlauge konstant gehalten. Während der 7. und 8. Stunde wird nach kurzer Unterbrechnung der Alkalizugabe ein p_{H}-Wert von 8,0 eingestellt. Insgesamt werden während des Luftdurchleitens 120 ml 3,2 gew.-%ige Natronlauge verbraucht. Nach 0,5, 1, 2, 3, 4, 6 und 8 Stunden werden die Proben c bis i gezogen. Der Feststoffgehalt der Dispersion ist nach 4 Stunden Destillation auf 60,15 Gew.-% angestiegen. Nach Abkühlen auf 30 °C wird die Dispersion durch Wasserzusatz auf einen Feststoffgehalt (FS) von 55 Gew.-% verdünnt. Der p_{H}-Wert der restmonomerfreien Dispersion beträgt 7,8 (Probe k). Die gaschromatographisch ermittelten Restmonomerwerte der Proben a bis k in Gew.-%, bezogen auf die Dispersion, sind in der Tabelle 1 zusammengefaßt wiedergegeben.

### Beispiel 2

Es wird wie im Beispiel 1 verfahren, jedoch wird anstelle von Luft Stickstoff durch die Dispersion geleitet. Der Feststoffgehalt steigt beim Rühren, Heizen und Destillieren unter Durchleiten von Stickstoff unter Vakuum auf 60 Gew.-% an. Nach Abkühlen auf 30 °C und Verdünnen der restmonomerfreien Dispersion auf einen Feststoffgehalt von 55 Gew.-% beträgt ihr p_{H}-Wert 8,0. Die Restmonomerwerte der Proben a bis k sind in der Tabelle 1 zusammengefaßt angegeben.

### Vergleichsbeispiel 1

Es wird wie im Beispiel 1 verfahren, jedoch werden anstelle der 320 ml 3,2 gew.-%iger Natronlauge 384 ml Wasser zugegeben. Der Feststoffgehalt steigt beim Destillieren unter Rühren, Heizen und Luftdurchleiten unter Vakuum auf 58 Gew.-% an. Nach Abkühlen der Dispersion und Verdünnen auf einen Feststoffgehalt von 55 Gew.-% beträgt ihr p_{H}-Wert 4,35. Die Analysenwerte der Proben a bis k sind in der Tabelle 1 zusammengefaßt angegeben.

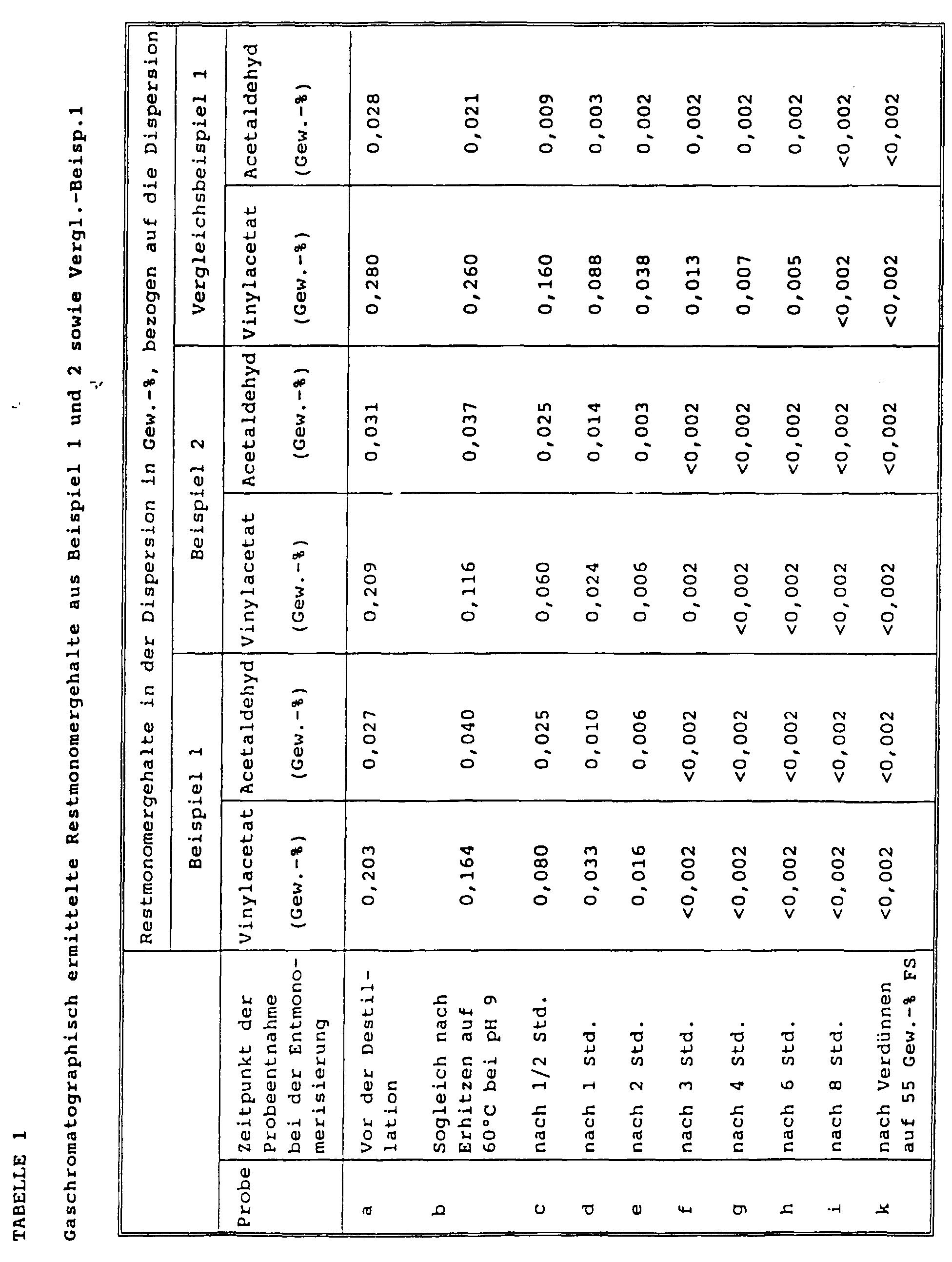

### Beispiel 3

5500 g einer 55,9 gew.-%igen Polyvinylacetatdispersion mit einem p_{H}-Wert von 4,5 und einem Restvinylacetatgehalt von 0,1 Gew.-%, bezogen auf die Dispersion, werden in einem 10 1 4-Halskolben mit Rührer, Heizbad und Innenthermometer mit 0,73 g Entschäumer des Beispiels 1 in 12,2 g Wasser sowie mit 1375 g Wasser verrührt und auf 60 °C erhitzt. Durch Zugabe von 200 ml 3,2 gew.-%iger Natronlauge wird der p_{H}-Wert auf 8,5 eingestellt. Man destilliert unter einem verminderten Druck von 200 - 300 mbar. Nach 3 Stunden sind 1375 ml Destillat übergegangen. Der Feststoffgehalt (FS) der Dispersion beträgt danach 57,75 Gew.-%. Nach Abkühlen auf 30 °C wird der FS durch Zugabe von Wasser auf 55 Gew.-% eingestellt. Der p_{H}-Wert der entmonomerisierten Dispersion beträgt 7,0. Gaschromatographisch lassen sich in der Dispersion kein Vinylacetat und kein Acetaldehyd mehr nachweisen. Die Dispersion ist geruchsfrei.

### Vergleichsbeispiel 2

Es wird wie im Beispiel 3 verfahren, jedoch keine Natronlauge zugegeben. Nach der Destillation erhält man eine 56,3 gew.-%ige Dispersion. Nach Abkühlen auf 30 °C wird sie mit Wasser auf einen Feststoffgehalt von 55 Gew.-% eingestellt. Ihr p_{H}-Wert beträgt 4,6 , der Restvinylacetatgehalt beträgt 0,017 Gew.-%, bezogen auf die Dispersion. Die Dispersion besitzt einen etwas scharfen, stechenden Geruch.

## Patentansprüche

1. Verfahren zur Verminderung des Gehaltes an restmonomeren Vinylestern und gegebenenfalls an Acetaldehyd in wäßrigen Kunststoffdispersionen, die disperse Polymerisatpartikel auf der Basis von ethylenisch ungesättigten Monomeren mit Monomereinheiten aus Vinylestern enthalten und aus den zugrundeliegenden Monomeren bzw. Comonomeren durch Emulsions-, Suspensions-, Perl-, Lösungs- oder Substanzpolymerisation hergestellt wurden, dadurch gekennzeichnet, daß man zur Eliminierung von Restgehalten an monomeren Vinylestern und gegebenenfalls an Acetaldehyd die alkalisch verseifbaren monomeren Vinylester durch eine selektive Verseifungsbehandlung der Dispersionen bei einem schwach alkalischen p_{H}-Wert und vorzugsweise bei erhöhter Temperatur hydrolytisch in die entsprechenden Carboxylate und in Acetaldehyd spaltet und den Acetaldehyd oder, vorzugsweise gleichzeitig, unverseifte restmonomere Vinylester und Acetaldehyd abdestilliert.

2. Verfahren nach Anspruch 1, dadurch gekennzeichnet, daß die Polymerisatpartikel Monomereinheiten aus Vinylacetat oder Vinylpropionat enthalten und Monomereinheiten aus Versaticsäurevinylester enthalten können.

3. Verfahren nach Anspruch 1 oder 2, dadurch gekennzeichnet, daß die Polymerisatpartikel Homopolymerisate oder Copolymerisate des Vinylacetats enthalten oder aus Homo- oder Copolymerisaten des Vinylacetats bestehen.

4. Verfahren nach einem oder mehreren der Ansprüche 1 bis 3, dadurch gekennzeichnet, daß die Polymerisatpartikel Copolymere aus Vinylacetat und einer oder mehreren Monomereinheiten aus der Gruppe Vinylester von (C₃-C₁₈)-Carbonsäuren, Acrylester, Methacrylester, Maleinsäure-, Fumarsäure-, Itakonsäure-halbester oder -diester von (C₁-C₂₂)-Alkoholen oder von (C₂-C₂₂)-Hydroxyalkoholen, Amide oder Mono- oder Di-(C₁-C₁₂)alkylamide oder -(C₂-C₁₂)alkylolamide von ethylenisch ungesättigten (C₃-C₅)-Mono- oder -Dicarbonsäuren, Ethylen, Isobutylen, Vinylchlorid, Vinylidenchlorid, Vinyl(C₁-C₄)alkylether, Acrylnitril, Acrylsäure, Methacrylsäure, Acrylamido-2-methyl-propansulfonsäure, Vinylphosphonsäure oder Vinylsulfonsäure enthalten.

5. Verfahren nach einem oder mehreren der Ansprüche 1 bis 4, dadurch gekennzeichnet, daß man die Verseifungsbehandlung im p_{H}-Bereich von 7,1 bis 10, vorzugsweise 7,5 bis 9, bei Temperaturen im Bereich von 20 bis 100 °C, vorzugsweise 40 bis 80 °C, und die Destillation des Acetaldehyds vorzugsweise während der Verseifungsreaktion oder danach durchführt.

6. Verfahren nach einem oder mehreren der Ansprüche 1 bis 5, dadurch gekennzeichnet, daß man das Verfahren diskontinuierlich oder kontinuierlich durchführt, wobei das kontinuierliche Verfahren vorzugsweise in einem Röhrenreaktor mit angeschlossener Destillationsvorrichtung, vorzugsweise im Temperaturbereich von 85 bis 100 °C, durchgeführt wird.

7. Verfahren nach einem oder mehreren der Ansprüche 1 bis 6, dadurch gekennzeichnet, daß man die Verseifungsbehandlung unter Zusatz von anorganischen oder organischen basischen Verbindungen, vorzugsweise in Form von wäßrigen Lösungen oder Verdünnungen dieser basischen Verbindungen und unter Verwendung von 0,5- bis 2-fach stöchiometrischen Mengen, vorzugsweise von einfach stöchiometrischen Mengen, dieser basischen Verbindungen, bezogen auf die stöchiometrische Gesamtmenge an bereits in der Dispersion vorhandenen sauren Bestandteilen zuzüglich der durch die Restmonomerenverseifung entstehenden Säuren, durchführt.

8. Verfahren nach einem oder mehreren der Ansprüche 1 bis 7, dadurch gekennzeichnet, daß die Verseifungsbehandlung unter Zusatz basischer Verbindungen aus der Gruppe Alkalioxide, Alkalihydroxide, Alkalicarbonate, Alkalihydrogencarbonate, Erdalkalioxide, Erdalkalihydroxide, Ammoniak, Alkanolamine, quaternäre Alkyl- oder Alkylarylammoniumhydroxide, vorzugsweise wäßrige Lösungen dieser Verbindungen, erfolgt, wobei Alkaliverbindungen besonders bevorzugt sind.

9. Verfahren nach einem oder mehreren der Ansprüche 1 bis 8, dadurch gekennzeichnet, daß man die erforderliche Basenmenge sukzessive oder auf einmal oder, vorzugsweise, zunächst 2/3 der Menge auf einmal und anschließend das restliche Drittel sukzessive unter p_{H}-Kontrolle zusetzt.

10. Verfahren nach einem oder mehreren der Ansprüche 1 bis 9, dadurch gekennzeichnet, daß die Destillation des Acetaldehyds und unverseifter restmonomerer Vinylester unter Normaldruck oder unter vermindertem Druck erfolgt und gegebenenfalls durch Einblasen von Wasserdampf oder eines Trägergases in den Reaktor bzw. in die Destillationsvorrichtung des Röhrenreaktors beschleunigt wird.

11. Verfahren nach einem oder mehreren der Ansprüche 1 bis 10, dadurch gekennzeichnet, daß die Gehalte an alkalisch verseifbaren restmonomeren Vinylestern, vorzugsweise an Vinylacetat, sowie an Acetaldehyd in der wäßrigen Kunststoffdispersion nach Beendigung der hydrolytischen und destillativen Eliminierungsreaktionen jeweils unterhalb von 0,01 Gew.-%, vorzugsweise bei ≤ 0,002 Gew.-%, bezogen auf die Dispersion, liegen.

12. Verwendung von wäßrigen restmonomerfreien Kunststoffdispersionen, erhalten nach einem oder mehreren der Ansprüche 1 bis 11, als Bindemittel in emissionsarmen bzw. emissionsfreien wäßrigen Zubereitungen für Anstriche, Beschichtungen, Putzmörtel, Dekorationsmörtel, Klebstoffe, Papierleimungsmittel, Faservliesbindemittel, Textilhilfsmittel, Lebensmittelbeschichtungsmittel, Anstrichfarben und chemisch-technische Formulierungen.

## Claims

1. A process for lowering the content of residual vinyl ester monomers and, where appropriate, of acetaldehyde in aqueous plastic dispersions which contain dispersed polymer particles based on ethylenically unsaturated monomers containing monomer units comprising vinyl esters and have been prepared from the base monomers or comonomers by emulsion, suspension, bead, solution or bulk polymerization, wherein, in order to remove residual contents of vinyl ester monomers and, where appropriate, acetaldehyde, the vinyl ester monomers saponifiable under alkaline conditions are split hydrolytically into the corresponding carboxylates and acetaldehyde by a selective saponification treatment of the dispersions at a weakly alkaline pH value and preferably at elevated temperature and the acetaldehyde or, preferably simultaneously, unsaponified residual vinyl ester monomers and acetaldehyde is or are distilled off.

2. The process as claimed in claim 1, wherein the polymer particles contain monomer units comprising vinyl acetate or vinyl propionate and can contain monomer units comprising vinyl versatate.

3. The process as claimed in claim 1 or 2, wherein the polymer particles contain homopolymers or copolymers of vinyl acetate or comprise homopolymers or copolymers of vinyl acetate.

4. The process as claimed in one or more of claims 1 to 3, wherein the polymer particles contain copolymers of vinyl acetate and one or more monomer units from the group comprising vinyl esters of (C₃-C₁₈)-carboxylic acids, acrylates, methacrylates, maleic acid, fumaric acid or itaconic acid half-esters or diesters of (C₁-C₂₂)-alcohols or of (C₂-C₂₂)-hydroxy alcohols, amides or mono- or di-(C₁-C₁₂)alkylamides or -(C₂-C₁₂)alkylolamides of ethylenically unsaturated (C₃-C₅)-monocarboxylic or -dicarboxylic acids, ethylene, isobutylene, vinyl chloride, vinylidene chloride, vinyl(C₁-C₄)-alkyl ethers, acrylonitrile, acrylic acid, methacrylic acid, acrylamido-2-methylpropanesulfonic acid, vinylphosphonic acid or vinylsulfonic acid.

5. The process as claimed in one or more of claims 1 to 4, wherein the sappnification treatment is carried out in the pH range from 7.1 to 10, preferably 7.5 to 9, at temperatures in the range from 20 to 100°C, preferably 40 to 80°C, and the distillation of the acetaldehyde is preferably carried out during the saponification reaction or thereafter.

6. The process as claimed in one or more of claims 1 to 5, wherein the process is carried out discontinuously or continuously, the continuous process preferably being carried out in a tube reactor to which a distillation apparatus is connected, preferably in the temperature range of from 85 to 100°C.

7. The process as claimed in one or more of claims 1 to 6, wherein the saponification treatment is carried out with the addition of inorganic or organic basic compounds, preferably in the form of aqueous solutions or dilutions of said basic compounds, and using 0.5 times to twice the stoichiometric amounts, preferably once the stoichiometric amount, of said basic compounds, with respect to the stoichiometric total amount of acid constituents already present in the dispersion plus the acids formed by the residual monomer saponification.

8. The process as claimed in one or more of claims 1 to 7, wherein the saponification treatment is carried out with the addition of basic compounds from the group comprising alkali metal oxides, alkali metal hydroxides, alkali metal carbonates, alkali metal hydrogen carbonates, alkaline earth metal oxides, alkaline earth metal hydroxides, ammonia, alkanolamines or quaternary alkylammonium or alkylarylammonium hydroxides, preferably aqueous solutions of said compounds, alkali metal compounds being particularly preferred.

9. The process as claimed in one or more of claims 1 to 8, wherein the required amount of base is added successively or all at once or, preferably, initially 2/3 of the amount is added all at once and the remaining third is then added successively with pH control.

10. The process as claimed in one or more of claims 1 to 9, wherein the distillation of the acetaldehyde and unsaponified residual vinyl ester monomers is carried out under normal pressure or under reduced pressure and, if appropriate, is accelerated by blowing steam or a carrier gas into the reactor or into the distillation apparatus of the tube reactor.

11. The process as claimed in one or more of claims 1 to 10, wherein the contents of residual vinyl ester monomers saponifiable under alkaline conditions, preferably of vinyl acetate, and of acetaldehyde in the aqueous plastic dispersion after the end of the reactions for removal by hydrolysis and distillation are each below 0.01 % by weight, preferably ≤ 0.002 % by weight, with respect to the dispersion.

12. The use of aqueous plastic dispersions free from residual monomers and obtained as claimed in one or more of claims 1 to 11 as binders in low-emission or emission-free aqueous formulations for paints, coatings, plaster mortars, decorative mortars, adhesives, paper sizing agents, nonwoven binders, textile auxiliaries, foodstuff coating agents, paints and industrial chemical formulations.

## Revendications

1. Procédé pour la réduction de la teneur en esters vinyliques monomères résiduels et éventuellement en acétaldéhyde dans des dispersions aqueuses de matières plastiques qui contiennent des particules polymères dispersées à base de monomères à insaturation éthylénique comportant des motifs monomères d'esters vinyliques et qui ont été obtenues à partir de monomères, respectivement de comonomères de base, par polymérisation en émulsion, en suspension, en perles, en solution ou en masse, caractérisé en ce que pour éliminer les teneurs en esters vinyliques monomères résiduels et éventuellement en acétaldéhyde, on soumet les dispersions à une saponification sélective à un pH faiblement alcalin et de préférence à températures élevées, saponification au cours de laquelle les esters vinyliques monomères saponifiables en milieu alcalin sont clivés par hydrolyse en les carboxylates correspondants et en acétaldéhyde, et on sépare par distillation l'acétaldéhyde ou, de préférence, simultanément, les monomères résiduels d'ester vinylique non saponifiés et l'acétaldéhyde.

2. Procédé selon la revendication 1, caractérisé en ce que les particules polymères peuvent contenir des motifs monomères acétate de vinyle ou propionate de vinyle et des motifs monomères esters vinyliques des acides versatiques.

3. Procédé selon la revendication 1 ou 2, caractérisé en ce que les particules polymères contiennent des homopolymères ou copolymères d'acétate de vinyle ou se composent d'homo- ou de copolymères d'acétate de vinyle.

4. Procédé selon une ou plusieurs des revendications 1 ou 3, caractérisé en ce que les particules polymères contiennent des copolymères d'acétate de vinyle et d'un ou plusieurs motifs monomères pris dans le groupe comportant des esters vinyliques des acides carboxyliques en C₃-C₁₈, l'ester acrylique, l'ester méthacrylique, les hémiesters ou les diesters de l'acide maléique, de l'acide fumarique, de l'acide itaconique des alcools en C₁-C₂₂ ou des hydroxyalcools en C₂-C₂₂, les amides ou les mono- ou di-(alkyl en C₁-C₁₂)-amides ou -(alkylol en C₂-C₁₂)-amides des acides mono- ou dicarboxyliques en C₃-C₅ à insaturation éthylénique, l'éthylène, l'isobutylène, le chlorure de vinyle, le chlorure de vinylidène, les éthers vinylalkyliques en C₁-C₄, l'acrylonitrile, l'acide acrylique, l'acide méthacrylique, l'acide acrylamido-2-méthylpropanesulfonique, l'acide vinylphosphonique ou l'acide vinylsulfonique.

5. Procédé selon une ou plusieurs des revendications 1 ou 4, caractérisé en ce que l'on effectue la saponification dans un domaine de pH de 7,1 à 10, de préférence de 7,5 à 9, à des températures dans l'intervalle de 20 à 100 °C, de préférence de 40 à 80 °C, et on met en oeuvre la distillation de l'acétaldéhyde de préférence au cours de la réaction de saponification ou après.

6. Procédé selon une ou plusieurs des revendications 1 ou 5, caractérisé en ce que l'on met en oeuvre le procédé en discontinu ou en continu, le procédé en continu étant de préférence mis en oeuvre dans un réacteur tubulaire avec un appareillage de distillation raccordé, de préférence dans un intervalle de températures de 85 à 100 °C.

7. Procédé selon une ou plusieurs des revendications 1 à 6, caractérisé en ce que l'on effectue le traitement de saponification en ajoutant des composés basiques minéraux ou organiques, de préférence sous forme de dilutions ou de solutions aqueuses de ces composés basiques et en utilisant une quantité de 0,5 à 2 fois stoechiométrique, de préférence une quantité simplement stoechiométrique de ces composés basiques par rapport à la quantité totale stoechiométrique des constituants acides déjà présents dans la dispersion, plus les acides qui se forment par saponification des monomères résiduels.

8. Procédé selon une ou plusieurs des revendications 1 ou 7, caractérisé en ce que l'on effectue le traitement de saponification en ajoutant des composés basiques pris dans.le groupe comportant des oxydes de métaux alcalins, des hydroxydes de métaux alcalins, des carbonates de métaux alcalins, des bicarbonates de métaux alcalins, des oxydes de métaux alcalino-terreux, des hydroxydes de métaux alcalino-terreux, l'ammoniac, des alcanolamines, des hydroxydes d'alkyl- ou d'alkylarylammonium quaternaire, de préférence des solutions aqueuses de ces composés, en préférant plus particulièrement les composés de métaux alcalins.

9. Procédé selon une ou plusieurs des revendications 1 à 8, caractérisé en ce que l'on ajoute la quantité nécessaire en base successivement ou en une seule fois, de préférence d'abord deux tiers de la quantité en une seule fois et ensuite le tiers restant, successivement, en contrôlant le pH.

10. Procédé selon une ou plusieurs des revendications 1 à 9, caractérisé en ce que l'on effectue la distillation de l'acétaldéhyde et des esters vinyliques monomères résiduels non saponifiés à la pression normale ou sous pression réduite et, éventuellement, elle est accélérée par soufflage de vapeur d'eau ou d'un gaz porteur dans le réacteur, respectivement dans l'appareillage de distillation du réacteur tubulaire.

11. Procédé selon une ou plusieurs des revendications 1 ou 10, caractérisé en ce que les teneurs en esters vinyliques monomères résiduels saponifiables en milieu alcalin, de préférence en acétate de vinyle ainsi qu'en acétaldéhyde dans les dispersions aqueuses de matières plastiques après avoir terminé les réactions d'élimination par hydrolyse et par distillation, soient chaque fois inférieures à 0,01 % en poids, de préférence ≤ 0,002 % en poids par rapport à la dispersion.

12. Utilisation des dispersions aqueuses de matières plastiques exemptes de monomères résiduels obtenues selon une ou plusieurs des revendications 1 ou 11 en tant qu'agents liants dans des préparations aqueuses sans émissions ou à un faible taux d'émissions dans des enduits, revêtements, mortiers, plâtres décoratifs, adhésifs, agents d'encollage, agents liants des nappes non tissées, adjuvants de textiles, revêtements de produits alimentaires,peintures et formulations chimiques techniques.
